# EUROPEAN PATENT SPECIFICATION

(11) **EP 3 626 512 B1**
(45) Date of publication and mention of the grant of the patent: **23.02.2022**
(21) Application number: 18195688.9
(22) Date of filing: 20.09.2018
(51) Int. Cl.: B60L 53/16

(54) **CHARGING ARRANGEMENT FOR AN ELECTRICAL VEHICLE AND RESPECTIVE METHOD**
LADEANORDNUNG FÜR EIN ELEKTROFAHRZEUG UND ZUGEHÖRIGES VERFAHREN
AGENCEMENT DE CHARGEMENT POUR VÉHICULE ÉLECTRIQUE ET PROCÉDÉ CORRESPONDANT

(43) Date of publication of application: 25.03.2020
(73) Proprietor: ABB Schweiz AG, 5400 Baden (CH)
(72) Inventor: Van-der-Horst, Arjen, 5400 Baden (CH)
(74) Representative: Maiwald Patent- und Rechtsanwaltsgesellschaft mbH

(56) References cited:
- WO-A1-2014/078456
- WO-A2-2011/079215
- GB-A- 2 185 866

## Description

### Technical Field

The invention relates to a charging arrangement for an electrical vehicle comprising the electrical vehicle and a charger component, whereby the electrical vehicle comprises a first charging connector arranged underneath the electrical vehicle for receiving electrical energy to charge the electrical vehicle. The invention further relates to a method for charging an electrical vehicle with electrical energy by a charger component, whereby the electrical vehicle comprises a first charging connector arranged underneath the electrical vehicle for receiving the electrical energy to charge the electrical vehicle.

### Background Art

Electric vehicle, EV, direct current, DC, fast charging systems and methods often use a so-called Combined Charging System, CCS, protocol according to IEC 61851-23 and SAE J1772 standard for charging electrical vehicles both in the US and in the European Union, EU. As charge currents increase, liquid cooled charge cables for connecting an Electric Vehicle Supply Equipment, EVSE, via a charge connector with the electrical vehicle are becoming more commonly used. The liquid cooling allows conductors within the charge cable to become thinner, and thereby less stiff and easier to use, because excessive heat due to high charge currents and charge cable internal resistances is taken care of. On the other side liquid cooling increases weight of the charge cable and makes handling due to the additional weight difficult.

Even though, as charge currents are still going up, cables are becoming thicker. In turn weight of the cables and in particular of liquid cooled conductive cables are increasing and are becoming too much for an an ordinary person to handle. Besides that, connectors are vulnerable components that are easily damaged if dropped or handled incorrectly and cooled cables only offer limited extensions to those power levels. Therefore, robotic systems have been developed for overcoming these disadvantages. However, such robotic systems are expensive and potentially dangerous for humans being too close to such robotic arms.

The document WO 2011/079215 A2 discloses a charging arrangement for an electrical vehicle, which is preferably provided for an overhead mounting relatively to the electric vehicle. The charging arrangement comprises a scoop on a top surface of the vehicle. A connector head arm is provided for supporting an electrical connector head assembly of the charging station. The connector arm includes various bars or components connected one to another so that they can move relative to one another. Thus, many different components are necessary for realizing the movable mechanical connection.

The document WO 2014/078456 A1 describes a similar charging arm comprising a plurality of charging brushes, which is positioned relative to the position of an electric vehicle. The plurality of charging brushes on the charging arm is positioned to contact a charging interface of the electric vehicle. The charging brushes are moved relative to the charging interface such that a portion of the charging brushes is removed as a result of the movement.

The document GB 2 185 866 A discloses that in response to an inter-engagement between a contact assembly on the vehicle and a charging head, charging current is supplied to the charging head for recharging the vehicle's battery. Many mechanical elements are necessary to connect the charging head to the ground.

### Summary of invention

It is therefore an object of the invention to provide a charging arrangement and a respective method for charging an electrical vehicle in a simple and automated manner.

The object of the invention is solved by the features of the independent claims Preferred embodiments are described in the dependent claims.

Thus, the object is solved by a charging arrangement for an electrical vehicle comprising the electrical vehicle and a charger component, whereby the electrical vehicle comprises a first charging connector arranged underneath the electrical vehicle for receiving electrical energy to charge the electrical vehicle, whereby the first charging connector comprises two vehicle contacts which extend away from each other in opposite and traverse direction of the electrical vehicle, and the charger component comprises two springs attached to ground and a second charging connector for providing electrical energy to the electrical vehicle, whereby the second charging connector comprises two parts each attached to one of the springs, the spring forces allowing a vertical, horizontal and rotational movement of the parts relative to ground and pressing the parts together and each part comprises a charging contact arranged opposite to and facing each other for establishing, by inserting the first charging connector into the second charging connector against the spring forces, electrical connection between the first charging connector and the second charging connector.

The object of the invention is further solved by a method for charging an electrical vehicle with electrical energy by a charger component, whereby
the electrical vehicle comprises a first charging connector arranged underneath the electrical vehicle for receiving the electrical energy to charge the electrical vehicle, whereby the first charging connector comprises two vehicle contacts which extend away from each other in opposite and traverse direction of the electrical vehicle, and
the charger component comprises two springs attached to ground and a second charging connector for providing electrical energy to the electrical vehicle, whereby the second charging connector comprises two parts each attached to one of the springs, the spring forces allowing a vertical, horizontal and rotational movement of the parts relative to ground and pressing the parts together, each part comprises a charging contact arranged opposite to and facing each,
the method comprising the step of

Inserting the first charging connector into the second charging connector against the spring forces for establishing electrical connection between the first charging connector and the second charging connector.

It is therefore a key point of the invention that an electrical connection for charging the electrical vehicle can be simply accomplished by driving the electrical vehicle above the charger component such that the first charging connector becomes inserted into the second charging connector, or alternatively by a simple translation of the second charging connector to a stationary electrical vehicle. Thus, an actuation for connecting the electrical vehicle and the charger component is actually done by moving respectively driving the electrical vehicle. Therefore, the proposed solution can be implemented in a very cheap manner without the need for an expensive and support intensive actuator for connecting the charger component to the electrical vehicle. In the case of moving the second charging connector the proposed solution does not need complex guidance systems but only a linear actuator. As the springs allow a vertical, horizontal and rotational movement of the second charging connector within a certain range, a great degree of flexibility exists for positioning the electrical vehicle above the charger component. In other words, even if the electrical vehicle with its first charging connector is not fully correctly inserted into the second charging connector, the springs allow movement of the second charging connector in vertical, horizontal and rotational direction thereby facilitating the connection of the charging connectors. The springs may be made of metal, or any flexible material, such as rubber. Inserting shall be preferably understood as movement in horizontal direction. Preferably the first charging connector corresponds to the second charging connector in such a way that the first charging connector can be slided onto the second charging connector by an horizontal movement and/or that the second charging connector can be connected to the firs charging connector by a vertical movement away from ground. The charging connectors are preferably configured for having a form-locking connection once connected.

The electrical vehicle can be provided as an electrical car, an ebus, a truck or any other electrical vehicle means. Providing the first charging connector underneath the electrical vehicle reduces cabling, weight of the electrical vehicle and respective costs, as a vehicle battery is usually provided on the bottom of the electrical vehicle due to weight distribution and therefore close to said first charging connector. The first charging connector and/or the second charging connector respectively the vehicle contacts and/or the charging contacts are preferably configured respectively dimensioned for charging currents of 63 A, 80 A, 125 A or more. Providing the first charging interface underneath the electrical vehicle shall preferably be understood that use other charging interfaces for example on a side of the electrical vehicle is not excluded. The electrical vehicle may comprise a vehicle body made of plastics, aluminium and/or metal to which the first charging connector can be attached, for example by means of screws.

The charger component may be part of an Electric Vehicle Supply Equipment, EVSE, for charging the electrical vehicle according to a called Combined Charging System, CCS, protocol according to IEC 61851-23 and SAE J1772. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GB/T, in particular according to 20234.3-2011 standard, can be used in connection with the proposed arrangement and/or method. Such way, the EVSE may comprise a transformer and/or a converter for connecting to respectively receiving electrical energy from an AC grid, which is transformed and/or converted to DC for being supplied to the first charging connector via a charging cable attached thereto.

The springs are preferably firmly attached to ground. The two parts preferably comprise an elongated and/or bar-like shape corresponding to the charging contacts. Preferably, the charging contacts are arranged completely within the parts and/or that the parts are configured such that the charging contacts are touch safe arranged inside the parts while being connectable by the vehicle contacts when moving the parts apart from each other against the spring forces. Thus, due to the spring force, the charging contacts are, if the first charging connector is not inserted within the second charging connector, preferably completely encased or at least partially encased by the two parts. The parts preferably comprise a corresponding facing flat surface at which the charging contacts are provided, thereby facing each other.

In a preferred implementation of the charging arrangement or of the method inserting the first charging connector into the second charging connector for establishing electrical connection between the first charging connector and the second charging connector comprises inserting the vehicle contacts between the parts against the spring forces for establishing electrical contact between a respective vehicle contact and a charging contact. By said inserting, in particular by driving the electrical vehicle "into" the charger component, or alternatively to a platform which can translate in the mating direction but is otherwise restrained or by moving the second charging connector into a vehicle outlet formed by the first charging connector, conductive connection is established between the electrical vehicle and the charger component in a simple manner without a need for an automated actuation system.

In another preferred implementation of the charging arrangement or of the method the vehicle contacts and/or the first charging connector comprises an elongated shape in longitudinal direction of the electrical vehicle. Preferably, the electrical vehicle comprises a backseat and/or a rear axle and the first charging connector is arranged underneath the backseat and/or adjacent to the rear axle of the electrical vehicle. The vehicle battery is preferably arranged on the bottom of the vehicle for receiving an optimal weight distribution and in particular underneath the backseat. If the first charging connector and the vehicle battery are provided in equal manner underneath the backseat and/or adjacent to the rear axle thick cables/busbars required for connecting the first charging connector to the vehicle battery can be very short in length and thus light in weight.

In a further preferred implementation of the charging arrangement or of the method the charging contacts and/or the second charging connector comprise an elongated shape, if the vehicle contacts are inserted between the parts, in longitudinal direction of the electrical vehicle. The vehicle contacts and/or the charging contacts preferably comprise copper, comprise an elongated extension, for example in form of a bar, and/or are provided with a flat, corresponding surface for establishing electrical contact.

In a further preferred implementation of the charging arrangement or of the method the first charging connector comprises, in direction of the longitudinal extension of the electrical vehicle, an inverted T-shape with the vehicle contacts attached to the opposite vertical parts of the T-shape and/or with rounded edges at the horizontal part. In another preferred implementation of the charging arrangement or of the method the first charging connector comprises a base plate mountable to a vehicle chassis of the electrical vehicle. The inverted T-shape is preferably attached with its horizontal upper end to the base plate. The inverted T-shape and/or the base plate are preferably made of a non-conducting material, such as a hard plastic. The inverted T-shape preferably comprises, in longitudinal extension of the electrical vehicle, an elongated shape such that elongated vehicle contacts can be attached to the vertical parts of the T-shape.

In a further preferred implementation of the charging arrangement or of the method the at least one of the two parts comprises a wheel for rolling the first charging connector and/or the base plate according to the previous claim. Preferably, each one wheel is attached to each one end of the parts such that four wheels are provided. The wheel facilitates insertion of the first charging connector into respectively between the parts of the second charging connector as the first charging connector may glide and/or slide with its base plate onto the wheel, thereby avoiding any disturbing friction between the charging connectors.

In another preferred implementation of the charging arrangement or of the method the two parts each comprise, in direction of the longitudinal direction of the electrical vehicle, a U-shape that is rotated by 90 degrees with the hollow parts of the U-shapes facing each other, in particular if the charging connectors are not connected respectively inserted, and the charging contacts are arranged inside the hollow parts. The U-shape parts are pressed together by the springs. Such way the charging contacts can be fully encased by the U-shape parts and thereby touch safe against unintended contact, dirt, environmental influences etc.

In a further preferred implementation of the charging arrangement or of the method the springs are provided as semi-circular arch or as bow spring with respective ends attached to ground and the second charging connector attached distant to ground between the ends to the semi-circular arch or bow spring. The springs are preferably arranged and installed on ground such that the semi-circular arches are parallel and distant to each other. The distance is preferably 5 to 10 cm. The second charging connector is preferably arranged around 20 to 30 cm above ground such that the electrical vehicle driving over the charger component contacts with its first charging connector the second charger connector for inserting the vehicle contacts between the charging contacts.

In another preferred implementation of the charging arrangement or of the method the second connector comprises a funnel shaped end, if the vehicle contacts are inserted between the parts, in longitudinal direction of the electrical vehicle. Such funnel shaped end advantageously simplifies insertion of the first charging connector into the second charging connector respectively of the vehicle contacts between the parts respectively the charging contacts. Preferably, a funnel shaped end is attached to each end and each part such that four funnel shaped ends are provided. The funnel shaped end preferably comprises, in top view, an arc of one-fourth or one-eight of a circle, in extension of the longitudinal extension of the respective part,

In a further preferred implementation of the charging arrangement or of the method, if the vehicle contacts are not inserted between the parts, the spring forces press the parts gap-free together. Therefore, the springs are preferably configured to apply such spring forces for pressing the parts gap-free together. Pushed gap-free together by the springs comprises the advantage that the charging contacts are effectively protected against unintended contact, dirt, environmental influences etc.

In another preferred implementation of the charging arrangement or of the method inserting the first charging connector into the second charging connector comprises pushing the parts apart, sliding the vehicle contacts between the parts, and/or sliding the first charging connector into the second charging connector and/or the vehicle contacts between the parts respectively the charging contacts by a horizontal movement. Preferably the method comprises said pushing step. By pushing the parts apart, by inserting the first charging connector into the second charging connector by driving the electrical vehicle "into" the charger component, the parts are preferably moved in traverse direction apart from each other.

### Brief description of drawings

These and other aspects of the invention will be apparent from and elucidated with reference to the embodiments described hereinafter.

In the drawings:
Fig. 1 shows a first charging connector of an electrical vehicle unconnected to a charger component having a second charging connector and two springs attached to ground according to a preferred embodiment in a first schematic view,
Fig. 2 shows the first charging connector of the electrical vehicle connected to the charger component having the second charging connector and the springs attached to ground according to the preferred embodiment in a second schematic view,
Fig. 3 shows the first charging connector of the electrical vehicle unconnected to the charger component having the second charging connector and the springs attached to ground according to the preferred embodiment in a third schematic view, and
Fig. 4 shows the first charging connector of the electrical vehicle connected to the charger component having the second charging connector and the springs attached to ground according to the preferred embodiment in a second schematic view.

### Description of embodiments

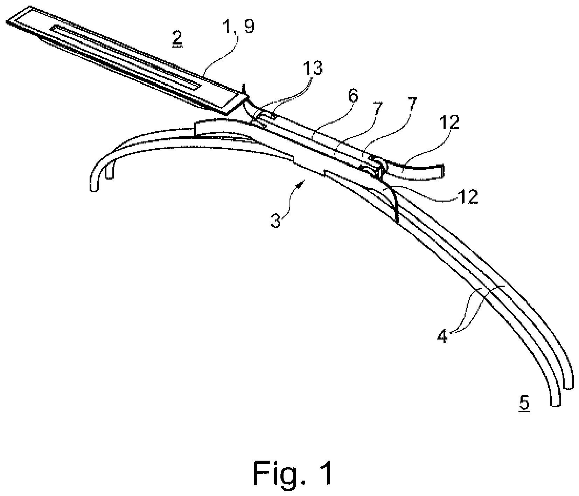

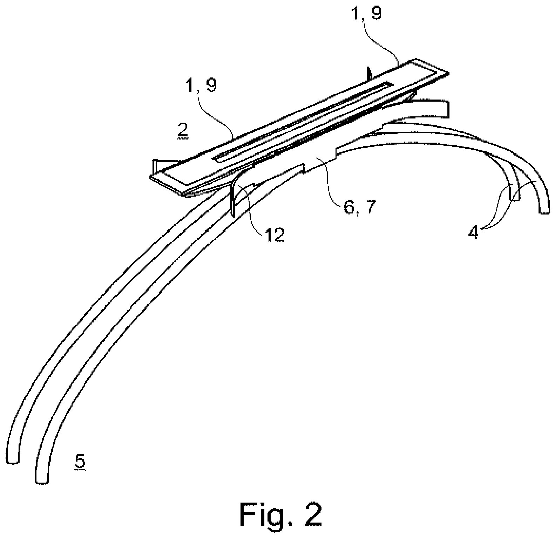

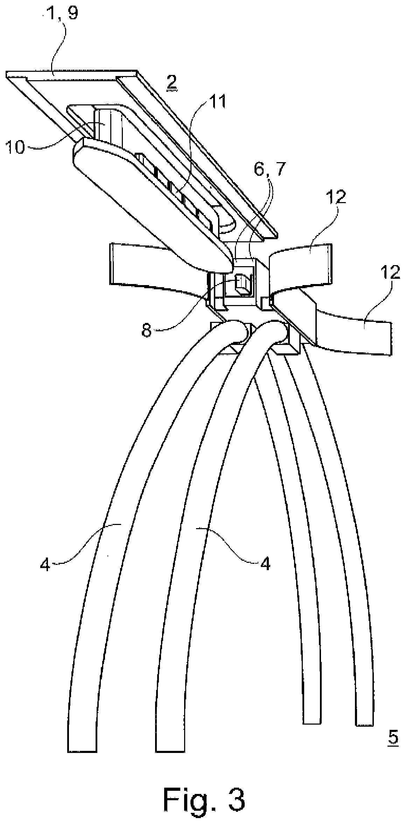

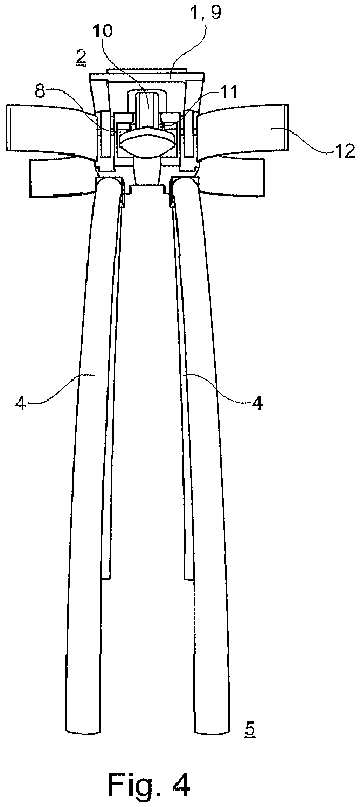

Figs. 1 and 3 show a first charging connector 1 of an electrical vehicle, implied by reference numeral 2, and a charger component 3 to which the first charging connector 1 is unconnected according to a preferred embodiment in a first and a third schematic view, respectively. Figs. 2 and 4 show the same embodiment with the first charging connector 1 electrically connected to the charger component 3 in a second and fourth schematic view, respectively.

The charger component 3 comprise two springs 4 which are provided as semi-circular bow springs and arranged distant by 5 to 10 cm and parallel to each other. Respective ends of the semi-circular bow springs 4 are attached adjacent to each other to ground 5. The charger component 3 further comprises a second charging connector 6, which is arranged and attached to the springs 4 in the middle between the respective ends thereby holding the second charging connector 6 distant to ground 5.

The second charging connector 6 comprises two parts 7, which are each attached to one of the springs 4. While the spring forces on one hand allow vertical, horizontal and rotational movement of the parts 7 relative to ground 5, on the other hand the spring forces press the parts 7 gap-free together. The parts 7 comprise an elongated shape which extends along its longitudinal axis parallel to ground 5. In transverse direction the parts 7 each comprise a U-shape that is rotated by 90 degrees such that the hollow parts of the U-shapes face each other along the elongated extension. Each part 7 comprises a charging contact 8, which is arranged touch-safe within the hollow part of the respective U-shape and extends in longitudinal direction parallel to ground 5. The U-shape is dimensioned such that human fingers cannot touch the charging contacts 8, for example by comprising an opening height of the horizontally extending U-shape of 1 cm or 0,8 cm. Such way the charging contacts 8 are arranged opposite to and face each other.

The first charging connector 1 comprises a flat base plate 9, which is mounted underneath a vehicle body of the electrical vehicle 2. Attached to the base plate 9 is, in direction of the longitudinal direction of the electrical vehicle 2, an inverted T-shape 10. The inverted T-shape 10 comprises an elongated extension in longitudinal direction of the electrical vehicle 2. While the horizontal part of the inverted T-shape 10 comprises rounded edges, vehicle contacts 11 are attached to the opposite vertical parts of the inverted T-shape 10. Such way the vehicle contacts 11 extend away from each other in opposite and traverse direction of the electrical vehicle 2, and also extend in longitudinal direction of the electrical vehicle 2, as can be seen from Fig. 3.

The charger component 3 comprises in top-view at each of its longitudinal ends to respective funnel shaped ends 12, whereby each one funnel shaped end 12 is attached to one end of a respective part 7 of the charger component 3. Such way the funnel shaped ends 12 facilitate insertion of the first charging connector 1 between the parts 7. For further facilitating such insertion a respective wheel 13 is attached two each one end of the parts 7 such that the base plate 9 can glide over the parts 7.

For establishing a conductive connection between the second charging connector 2 of the charger component 3 arranged on ground 5 the electrical vehicle 2 needs to drive if it's first charging connector 1 attached underneath the electrical vehicle 2 into the funnel shaped ends 12. Such way the parts 7 are pushed apart from each other against the spring forces so that the inverted T-shape 10 glides between the parts 7, facilitated by the wheels 13. Finally, the vehicle contacts 11 contact the respective charging contacts 8 such that the electrical vehicle 2 can be charged with electrical energy via the so established connection.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: first charging connector
- 2: electrical vehicle
- 3: charger component
- 4: spring
- 5: ground
- 6: second charging connector
- 7: part
- 8: charging contact
- 9: base plate
- 10: inverted T-shape
- 11: vehicle contact
- 12: funnel shaped end
- 13: wheel

## Claims

1. A charging arrangement for an electrical vehicle (2), comprising the electrical vehicle (2) and a charger component (3), whereby
the electrical vehicle (2) comprises a first charging connector (1) arranged underneath the electrical vehicle (2) for receiving electrical energy to charge the electrical vehicle (2), whereby the first charging connector (1) comprises two vehicle contacts (11) which extend distant to each other in longitudinal direction of the electrical vehicle (2), **characterized in that**
the charger component (3) comprises two springs (4) attached to ground (5) and a second charging connector (6) for providing electrical energy to the electrical vehicle (2), whereby the second charging connector (6) comprises two parts (7) each attached to one of the springs (4), the spring forces allowing a vertical, horizontal and rotational movement of the parts (7) relative to ground (5) and pressing the parts (7) together and each part (7) comprises a charging contact (8) arranged opposite to and facing each other for establishing, by inserting the first charging connector (1) into the second charging connector (6) against the springs forces, electrical connection between the first charging connector (1) and the second charging connector (6).

2. The charging arrangement according to claim 1, whereby inserting the first charging connector (1) into the second charging connector (6) for establishing electrical connection between the first charging connector (1) and the second charging connector (6) comprises inserting the vehicle contacts (11) between the parts (7) against the spring forces for establishing electrical contact between a respective vehicle contact (11) and a charging contact (8).

3. The charging arrangement according to any of the previous claims, whereby the vehicle contacts (11) and/or the first charging connector (1) comprise an elongated shape in the longitudinal direction of the electrical vehicle (2).

4. The charging arrangement according to the previous claims, whereby the charging contacts (8) and/or the second charging connector (6) comprise an elongated shape, if the vehicle contacts (11) are inserted between the parts (7), in longitudinal direction of the electrical vehicle (2).

5. The charging arrangement according to any of the previous claims, whereby the first charging connector (1) comprises, in direction of the longitudinal direction of the electrical vehicle (2), an inverted T-shape (10) with the vehicle contacts (11) attached to the opposite vertical parts (7) of the T-shape (10) and/or with rounded edges at the horizontal part.

6. The charging arrangement according to any of the previous claims, whereby the first charging connector (1) comprises a base plate (9) mountable to a vehicle chassis of the electrical vehicle (2).

7. The charging arrangement according to any of the previous claims, whereby the at least one of the two parts (7) comprises a wheel (13) for rolling the first charging connector (1) and/or the base plate (9) according to the previous claim.

8. The charging arrangement according to any of the previous claims, whereby the two parts (7) each comprise, in direction of the longitudinal direction of the electrical vehicle (2), a U-shape that is rotated by 90 degrees with the hollow parts of the U-shapes facing each other and the charging contacts (8) are arranged inside the hollow parts.

9. The charging arrangement according to any of the previous claims, whereby the springs (4) are provided as semi-circular arch or as bow spring with respective ends attached to ground (5) and the second charging connector (6) is attached distant to ground (5) between the ends to the semi-circular arch or bow spring.

10. The charging arrangement according to any of the previous claims, whereby the second charging connector (6) comprises a funnel shaped end (12), if the vehicle contacts (11) are inserted between the parts (7), extending in longitudinal direction of the electrical vehicle (2).

11. The charging arrangement according to any of the previous claims, whereby, if the vehicle contacts (11) are not inserted between the parts (7), the spring forces press the parts (7) gap-free together.

12. The charging arrangement according to any of the previous claims, whereby inserting the first charging connector (1) into the second charging connector (6) comprises pushing the parts (7) apart, sliding the vehicle contacts (11) between the parts (7) and/or sliding the first charging connector (1) into the second charging connector (6) and/or the vehicle contacts (11) between the parts (7) respectively the charging contacts by a horizontal movement.

13. A method for charging an electrical vehicle (2) with electrical energy by a charger component (3) of a charging arrangement according to claim 1, whereby the method comprises the step of
Inserting the first charging connector (1) into the second charging connector (6) against the springs forces for establishing electrical connection between the first charging connector (1) and the second charging connector (6).

## Patentansprüche

1. Ladeanordnung für ein Elektrofahrzeug (2), die ein Elektrofahrzeug (2) und eine Laderkomponente (3) umfasst, wobei
das Elektrofahrzeug (2) einen ersten Ladeanschluss (1) aufweist, der unter dem Elektrofahrzeug (2) angeordnet ist, um elektrische Energie zu empfangen, um das Elektrofahrzeug (2) zu laden, wobei der erste Ladeanschluss (1) zwei Fahrzeugkontakte (11) aufweist, die in Längsrichtung des Elektrofahrzeugs (2) in gegenseitigem Abstand verlaufen, **dadurch gekennzeichnet, dass**
die Laderkomponente (3) zwei Federn (4), die am Boden (5) befestigt sind, und einen zweiten Ladeanschluss (6), um für das Elektrofahrzeug (2) elektrische Energie bereitzustellen, aufweist, wobei der zweite Ladeanschluss (6) zwei Teile (7) enthält, wovon jedes an einer der Federn (4) befestigt ist, wobei die Federkräfte eine vertikale, eine horizontale und eine rotatorische Bewegung der Teile (7) relativ zum Boden (5) zulassen und die Teile (7) gegeneinander drücken, wobei jedes Teil (7) einen Ladekontakt (8) aufweist, die einander gegenüber und einander zugewandt angeordnet sind, um durch Einstecken des ersten Ladenschlusses (1) in den zweiten Ladeanschluss (6) entgegen den Federkräften eine elektrische Verbindung zwischen dem ersten Ladeanschluss (1) und dem zweiten Ladeanschluss (6) herzustellen.

2. Ladeanordnung nach Anspruch 1, wobei das Einstecken des ersten Ladenschlusses (1) in den zweiten Ladeanschluss (6), um eine elektrische Verbindung zwischen dem ersten Ladeanschluss (1) und dem zweiten Ladeanschluss (6) herzustellen, das Einstecken der Fahrzeugkontakte (11) zwischen die Teile (7) entgegen den Federkräften, um einen elektrischen Kontakt zwischen einem jeweiligen Fahrzeugkontakt (11) und einem jeweiligen Ladekontakt (8) herzustellen, umfasst.

3. Ladeanordnung nach einem der vorhergehenden Ansprüche, wobei die Fahrzeugkontakte (11) und/oder der erste Ladeanschluss (1) in der Längsrichtung des Elektrofahrzeugs (2) eine längliche Form aufweisen.

4. Ladeanordnung nach den vorhergehenden Ansprüchen, wobei die Ladekontakte (8) und/oder der zweite Ladeanschluss (6) in der Längsrichtung des Elektrofahrzeugs (2) eine längliche Form aufweisen, falls die Fahrzeugkontakte (11) zwischen die Teile (7) gesteckt sind.

5. Ladeanordnung nach einem der vorhergehenden Ansprüche, wobei der erste Ladeanschluss (1) in der Längsrichtung des Elektrofahrzeugs (2) eine umgedrehte T-Form (10) aufweist, wobei die Fahrzeugkontakte (11) an den gegenüberliegenden vertikalen Teilen (7) der T-Form (10) befestigt sind und/oder am horizontalen Teil die Kanten abgerundet sind.

6. Ladeanordnung nach einem der vorhergehenden Ansprüche, wobei der erste Ladeanschluss (1) eine Grundplatte (9) aufweist, die an einem Fahrzeugchassis des Elektrofahrzeugs (2) angebracht sein kann.

7. Ladeanordnung nach einem der vorhergehenden Ansprüche, wobei wenigstens eines der beiden Teile (7) ein Rad (13) aufweist, um darauf den ersten Ladeanschluss (1) und/oder die Grundplatte (9) nach dem vorhergehenden Anspruch zu rollen.

8. Ladeanordnung nach einem der vorhergehenden Ansprüche, wobei die beiden Teile (7) in der Längsrichtung des Elektrofahrzeugs (2) jeweils eine U-Form aufweisen, die um 90 Grad gedreht sind, wobei die hohlen Abschnitte der U-Formen einander zugewandt sind und die Ladekontakte (8) in den hohlen Abschnitten angeordnet sind.

9. Ladeanordnung nach einem der vorhergehenden Ansprüche, wobei die Federn (4) als halbkreisförmiger Bogen oder als Bogenfeder bereitgestellt sind, wobei jeweilige Enden am Boden (5) befestigt sind und der zweite Ladeanschluss (6) entfernt vom Boden (5) zwischen den Enden des halbkreisförmigen Bogens oder der Bogenfeder befestigt ist.

10. Ladeanordnung nach einem der vorhergehenden Ansprüche, wobei der zweite Ladeanschluss (6) ein trichterförmiges Ende (12) aufweist, das sich in der Längsrichtung des Elektrofahrzeugs (2) erstreckt, wenn die Fahrzeugkontakte (11) zwischen die Teile (7) gesteckt sind.

11. Ladeanordnung nach einem der vorhergehenden Ansprüche, wobei die Federkräfte dann, wenn die Fahrzeugkontakte (11) nicht zwischen die Teile (7) gesteckt sind, die Teile (7) ohne Spalt zusammenpressen.

12. Ladeanordnung nach einem der vorhergehenden Ansprüche, wobei das Einstecken des ersten Ladeanschlusses (1) in den zweiten Ladeanschluss (6) das Wegschieben der Teile (7), das Gleiten der Fahrzeugkontakte (11) zwischen die Teile (7) und/oder das Gleiten des ersten Ladeanschlusses (1) in den zweiten Ladeanschluss (6) und/oder der Fahrzeugkontakte (11) zwischen die Teile (7) der jeweiligen Ladekontakte durch eine horizontale Bewegung umfasst.

13. Verfahren zum Laden eines Elektrofahrzeugs (2) mit elektrischer Energie durch eine Laderkomponente (3) einer Ladeanordnung nach Anspruch 1, wobei das Verfahren den folgenden Schritt umfasst:
Einstecken des ersten Ladeanschlusses (1) in den zweiten Ladeanschluss (6) entgegen den Federkräften, um eine elektrische Verbindung zwischen dem ersten Ladeanschluss (1) und dem zweiten Ladeanschluss (6) herzustellen.

## Revendications

1. Agencement de charge pour un véhicule électrique (2), comprenant le véhicule électrique (2) et un composant chargeur (3),
le véhicule électrique (2) comprenant un premier connecteur de charge (1) agencé sous le véhicule électrique (2) pour recevoir de l'énergie électrique afin de charger le véhicule électrique (2), le premier connecteur de charge (1) comprenant deux contacts de véhicule (11) qui s'étendent à distance l'un de l'autre dans la direction longitudinale du véhicule électrique (2), **caractérisé en ce que**
le composant chargeur (3) comprend deux ressorts (4) fixés au sol (5) et un second connecteur de charge (6) pour fournir de l'énergie électrique au véhicule électrique (2), le second connecteur de charge (6) comprenant deux parties (7) fixées chacune à l'un des ressorts (4), les forces de ressort permettant un mouvement vertical, horizontal et rotatif des parties (7) par rapport au sol (5) et pressant les parties (7) l'une contre l'autre, et chaque partie (7) comprenant un contact de charge (8) agencé à l'opposé et en face l'un de l'autre pour établir, par insertion du premier connecteur de charge (1) dans le second connecteur de charge (6) contre les forces de ressort, une connexion électrique entre le premier connecteur de charge (1) et le second connecteur de charge (6).

2. Agencement de charge selon la revendication 1, l'insertion du premier connecteur de charge (1) dans le second connecteur de charge (6) pour établir une connexion électrique entre le premier connecteur de charge (1) et le second connecteur de charge (6) comprenant l'insertion des contacts de véhicule (11) entre les parties (7) contre les forces de ressort pour établir un contact électrique entre un contact de véhicule respectif (11) et un contact de charge (8).

3. Agencement de charge selon l'une quelconque des revendications précédentes, les contacts de véhicule (11) et/ou le premier connecteur de charge (1) comprenant une forme allongée dans la direction longitudinale du véhicule électrique (2).

4. Agencement de charge selon les revendications précédentes, les contacts de charge (8) et/ou le second connecteur de charge (6) comprenant une forme allongée, si les contacts de véhicule (11) sont insérés entre les parties (7), dans la direction longitudinale du véhicule électrique (2).

5. Agencement de charge selon l'une quelconque des revendications précédentes, le premier connecteur de charge (1) comprenant, dans le sens de la direction longitudinale du véhicule électrique (2), une forme en T inversé (10) avec les contacts du véhicule (11) fixés aux parties verticales opposées (7) de la forme en T (10) et/ou avec des bords arrondis au niveau de la partie horizontale.

6. Agencement de charge selon l'une quelconque des revendications précédentes, le premier connecteur de charge (1) comprenant une plaque de base (9) pouvant être montée sur un châssis de véhicule du véhicule électrique (2).

7. Agencement de charge selon l'une quelconque des revendications précédentes, l'au moins une des deux parties (7) comprenant une roue (13) pour faire rouler le premier connecteur de charge (1) et/ou la plaque de base (9) selon la revendication précédente.

8. Agencement de charge selon l'une quelconque des revendications précédentes, les deux parties (7) comprenant chacune, dans le sens de la direction longitudinale du véhicule électrique (2), une forme en U qui est tournée de 90 degrés avec les parties creuses des formes en U se faisant face et les contacts de charge (8) étant agencés à l'intérieur des parties creuses.

9. Agencement de charge selon l'une quelconque des revendications précédentes, les ressorts (4) étant fournis sous la forme d'un arc semi-circulaire ou d'un ressort en arc avec des extrémités respectives fixées au sol (5) et le second connecteur de charge (6) étant fixé à distance du sol (5) entre les extrémités de l'arc semi-circulaire ou du ressort en arc.

10. Agencement de charge selon l'une quelconque des revendications précédentes, le second connecteur de charge (6) comprenant une extrémité en forme d'entonnoir (12), si les contacts du véhicule (11) sont insérés entre les parties (7), s'étendant dans la direction longitudinale du véhicule électrique (2).

11. Agencement de charge selon l'une quelconque des revendications précédentes, si les contacts de véhicule (11) ne sont pas insérés entre les parties (7), les forces de ressort pressant les parties (7) l'une contre l'autre sans interstice.

12. Agencement de charge selon l'une quelconque des revendications précédentes,
l'insertion du premier connecteur de charge (1) dans le second connecteur de charge (6) comprenant l'écartement des parties (7), le coulissement des contacts de véhicule (11) entre les parties (7) et/ou le coulissement du premier connecteur de charge (1) dans le second connecteur de charge (6) et/ou des contacts de véhicule (11) entre les parties (7) respectivement des contacts de charge par un mouvement horizontal.

13. Procédé de charge d'un véhicule électrique (2) avec de l'énergie électrique par un composant chargeur (3) d'un agencement de charge selon la revendication 1, le procédé comprenant l'étape de
insertion du premier connecteur de charge (1) dans le second connecteur de charge (6) contre les forces de ressort pour établir une connexion électrique entre le premier connecteur de charge (1) et le second connecteur de charge (6).
